# DEMANDE DE BREVET EUROPEEN

(11) **EP 3 388 175 A1**
(43) Date de publication de la demande: **17.10.2018**
(21) Numéro de dépôt: 17165879.2
(22) Date de dépôt: 11.04.2017
(51) Int. Cl.: B23D 35/00, B23D 15/04, B23D 31/00

(54) **LAME DE CISAILLAGE POUR PRESSES**

(71) Demandeur: Henschel, Danieli, 73000 Chambery (FR)
(72) Inventeur: BOUVIER, Jean-Michel, 73000 Chambery (FR); KOETZEL, Patrick, 38080 L'ISLE D'ABEAU (FR); FOGERON, Romain, 73000 Chambery (FR)
(74) Mandataire: Croonenbroek, Thomas Jakob

(57) **Abrégé**

La présente invention concerne une lame de cisaillage (1) destinée à être positionnée dans un logement (5) d'une presse, ledit logement (5) comprenant une paroi inférieure, une paroi arrière et deux parois latérales pour presse-cisaille dans laquelle la lame (1) comprend une face inférieure (21), une face arrière (15) et deux faces latérales (17, 19) complémentaires respectivement de la paroi inférieure, de la paroi arrière et des parois latérales du logement (5), la lame (1) comprenant également une face avant (13) et une face supérieure (23) et une arête de cisaillage (A1) à l'interface entre la face avant (13) et la face supérieure (23),
dans laquelle la lame (1) comprend un ou plusieurs blocs (B1, B2, B3) adjacents dans le sens de l'arête de cisaillage (A1),
au moins un bloc (B1), dit bloc pivot, comprenant une face avant (13) plus longue, dans le sens de l'arête de cisaillage (A1), que sa face arrière (15) et une face latérale inclinée (17, 19, 45, 47) de sorte que pour tout point de la face latérale inclinée (17, 19, 45, 47), l'inclinaison, par rapport à une direction orthogonale à la face avant (13), est supérieure ou égale à la tangente au cercle passant par ce point et dont le centre est la jonction entre la face avant (13) et la face latérale (17, 19) du bloc opposée à ladite face latérale inclinée (17, 19, 45, 47).

## Description

La présente invention concerne le domaine des presses destinées à cisailler du matériau métallique destiné au recyclage.

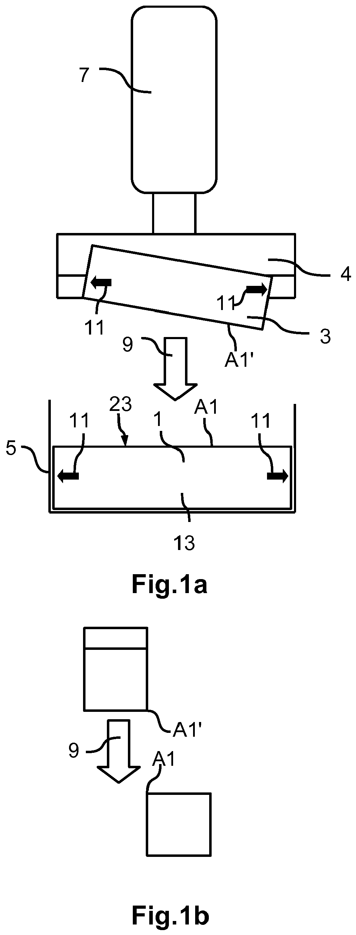

Pour obtenir le cisaillage des métaux, les presses sont généralement munies d'une première lame de cisaillage fixe et une deuxième lame de cisaillage mobile. La figure 1a représente une vue de face d'un schéma du dispositif de cisaillage comprenant la lame fixe 1 placée dans un logement 5 du bâti d'une presse et la lame mobile 3 généralement inclinée par rapport à la lame fixe 1 et fixée dans un logement d'une pièce mobile 4, appelée mors, actionnée par un vérin 7 qui permet de déplacer le mors et donc la lame mobile 3 vers la lame fixe 1 dans la direction de cisaillage représentée par la flèche 9. Le cisaillage se fait entre l'arête de cisaillage A1 de la lame fixe 1 située à l'interface entre la face avant 13 et la face supérieure 23 et l'arête de cisaillage A1' de la lame mobile 3. La position respective des arêtes A1 et A1' est mieux visible sur la figure 1b qui représente une vue de côté de la lame fixe 1 et de la lame mobile 3.

Cependant, durant la durée de vie de la lame fixe 1 et de la lame mobile 3, une partie des efforts répétés dans la direction de cisaillage sont répercutés latéralement comme représenté par les flèches 11. Ces efforts latéraux tendent à déformer légèrement la lame fixe 1 et le logement 5 de la presse dans lequel est placée la lame 1 ainsi que la lame mobile 3 et le mors mobile 4 de sorte qu'il devient très difficile de retirer la lame fixe 1 et/ou la lame mobile 3 pour les changer lorsque ces dernières sont usées, c'est à dire lorsque les arêtes de cisaillage A1 et A1' sont émoussées. Ainsi, pour retirer la lame fixe 1 du logement 5 et la lame mobile 3 du mors, des efforts importants doivent être appliquer à la lame 1 et ces efforts doivent être appliqués de manière équilibrée sur les lames 1 et 3 pour que ces dernières sortent parallèlement aux faces latérales des logements ce qui rend le changement des lames 1 et 3 très fastidieux.

La présente invention vise donc à surmonter ces inconvénients et à proposer un dispositif afin de faciliter le procédé d'extraction des lames et par conséquent effectuer rapidement le changement ou le retournement des lames.

A cet effet, la présente invention concerne une lame de cisaillage destinée à être positionnée dans un logement d'un bâti ou d'un mors mobile d'une presse, le logement comprenant une première paroi d'appui, une deuxième paroi d'appui adjacente à la première paroi d'appui et deux parois latérales dans laquelle la lame comprend une première face d'appui, une deuxième face d'appui et deux faces latérales destinées à venir respectivement contre la première paroi d'appui, contre la deuxième paroi d'appui et contre les deux parois latérales du logement, la lame comprenant également une première face de travail opposée à la deuxième face d'appui et sensiblement parallèle à la direction de cisaillage et une deuxième face de travail opposée à la première face d'appui et sensiblement perpendiculaire à la direction de cisaillage et une arête de cisaillage à l'interface entre la première face de travail et la deuxième face de travail, la lame comprend un ou plusieurs blocs adjacents dans le sens de l'arête de cisaillage, au moins un bloc, dit bloc pivot, comprenant une première face de travail plus longue, dans le sens de l'arête de cisaillage, que sa deuxième face d'appui et une face latérale inclinée de sorte que pour tout point de la face latérale inclinée, l'inclinaison, par rapport à la première face de travail, est inférieure ou égale à la tangente au cercle passant par ce point et dont le centre est la jonction entre la première face de travail et la face latérale du bloc opposée à ladite face latérale inclinée.

Selon un autre aspect de la présente invention, la lame de cisaillage comprend un seul bloc et deux faces latérales inclinées symétriques de sorte que la lame de cisaillage peut être placée dans un premier et/ou un deuxième sens dans le logement de la presse par le biais d'un retournement de ladite lame à 180° autour d'un axe normal à la première face de travail.

Selon un aspect additionnel de la présente invention, la lame a une forme générale parallélépipédique et comprend plusieurs blocs complémentaires dont deux blocs d'extrémité comprenant une face latérale inclinée par rapport à la direction de cisaillage, ladite face latérale inclinée par rapport à la direction de cisaillage étant située à l'interface entre deux blocs.

Selon un aspect supplémentaire de la présente invention, la forme de la face latérale inclinée d'un bloc d'extrémité est un arc de cercle dont le rayon est la longueur de la première face de travail selon la direction de l'arête de cisaillage et dont le centre correspond à la jonction entre la première face de travail et la face latérale d'extrémité de la lame.

Selon un autre aspect de la présente invention, la lame de cisaillage comprend au moins trois blocs dans laquelle le premier bloc d'extrémité constitue le bloc pivot pour au moins une première orientation de la lame dans le logement tandis que le second bloc d'extrémité constitue le bloc pivot pour au moins une deuxième orientation de la lame dans le logement.

Selon un aspect additionnel de la présente invention, un bloc comprend au moins un perçage entre sa première face de travail et sa deuxième face d'appui pour permettre le passage d'une vis.

La présente invention concerne également une presse comprenant au moins un logement avec une première paroi d'appui, une deuxième paroi d'appui et deux parois latérales, ledit logement étant destiné à recevoir une lame de cisaillage.

Selon un autre aspect de la présente invention, la presse comprend deux logements dont au moins un des logements est ménagé dans un mors mobile, ledit, au moins un, mors mobile étant actionné par un vérin.

La présente invention concerne également un procédé de changement d'une lame de cisaillage montée dans un logement d'une presse, ledit procédé comprenant les étapes suivantes :
- on desserre le dispositif de fixation de la lame de cisaillage dans son logement,
- on fait pivoter le bloc pivot vers l'avant, c'est-à-dire du côté de la première face de travail autour de la jonction entre la face avant et la face latérale opposée à la face latérale inclinée,
   dans le cas où il y a plusieurs blocs,
- on enlève les autres blocs,
   si la lame comprend une autre arête utilisable comme arête de cisaillage,
   - on replace les blocs de manière à placer l'autre arête utilisable de la lame comme arête de cisaillage,
   - on resserre le dispositif de fixation,
   sinon,
   - on place une nouvelle lame de cisaillage,
   - on resserre le dispositif de fixation.

D'autres caractéristiques et avantages de l'invention ressortiront de la description suivante, donnée à titre d'exemple et sans caractère limitatif, en regard des dessins annexés sur lesquels :
- la figure 1a représente une vue de face d'un schéma d'un dispositif de cisaillage d'une presse,
- la figure 1b représente une vue de côté d'un schéma des lames d'une presse ,
- La figure 2 représente un schéma en trois dimensions d'un premier mode de réalisation d'une lame fixe de cisaillage selon la présente invention,
- La figure 3 représente une vue de dessus d'une lame fixe selon un deuxième mode de réalisation,
- La figure 4 représente une vue en trois dimensions d'une lame fixe de cisaillage selon un troisième mode de réalisation,
- La figure 5 représente une vue en trois dimensions d'une lame fixe de cisaillage selon un quatrième mode de réalisation,
- La figure 6 représente une vue en trois dimensions d'une lame fixe de cisaillage selon un cinquième mode de réalisation,
- La figure 7 représente une vue en trois dimensions d'une lame fixe de cisaillage selon un sixième mode de réalisation,
- La figure 8 représente une vue en trois dimensions d'une lame fixe de cisaillage selon un septième mode de réalisation,
- La figure 9 représente une vue en trois dimensions d'une lame fixe de cisaillage selon un huitième mode de réalisation,
- La figure 10 représente une vue en trois dimensions d'une lame fixe de cisaillage selon un neuvième mode de réalisation,
- La figure 11 représente un organigramme des étapes du procédé de changement de la lame de la presse-cisaille.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Le terme «presse» désigne toutes sortes de presses et/ou de cisailles, notamment des presse-cisailles ;
La présente invention ne se limite pas aux lames de cisaillage fixes ni aux lames inférieures (situées en dessous) mais s'étend aux lames mobiles et aux lames supérieures. De plus, il est à noter qu'une presse peut comprendre une lame fixe et une lame mobile mais peut aussi comprendre deux lames mobiles, les deux lames se déplaçant alors l'une vers l'autre lors du cisaillage. Ainsi, Dans la suite de la description, on se limitera à décrire un lame de cisaillage fixe située dans un logement fixe d'un bâti, ladite lame fixe se trouvant en-dessous de la lame mobile mais la présente invention s'étend aux autres types de lame de presses.

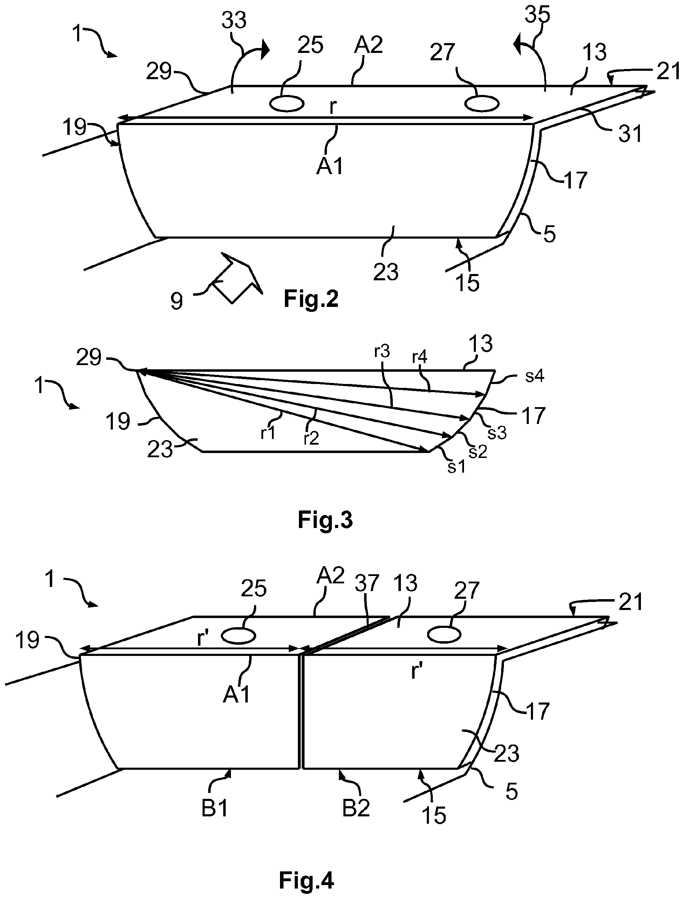

La figure 2 représente un schéma d'une lame de cisaillage 1 selon un premier mode de réalisation dans lequel la lame 1 est formée d'un seul bloc. La direction de cisaillage est normale à une deuxième face de travail 23 correspondant à la face supérieure 23 et est représentée par la flèche 9. La lame 1 est placée dans un logement 5 d'une presse représentée partiellement. La lame 1 comprend une première face de travail 13, correspondant à la face avant plane 13, une deuxième face d'appui 15, correspondant à la face arrière plane 15, parallèle à la face avant 13, deux faces latérales 17 et 19, une première face d'appui 21, correspondant à la face inférieure plane 21 perpendiculaire aux faces avant 13 et arrière 15. La face supérieure plane 23 est parallèle à la face inférieure 21. L'intersection de la face avant 13 avec la face supérieure 23 forme une arête de cisaillage A1.

Le logement 5 comprend une première paroi d'appui correspondant à la paroi inférieure, une deuxième paroi d'appui correspondant à la paroi arrière et deux parois latérales contre lesquelles viennent respectivement, la face inférieure 21, la face arrière 15 et les faces latérales 17 et 19 de la lame 1.

La face avant 13 est plus longue que la face arrière 15 dans le sens de l'arête de cisaillage A1 et les faces latérales 17 et 19 sont symétriques par rapport à un plan transversal perpendiculaire à l'arête de cisaillage A1 et ont une forme incurvée dont le rayon de courbure noté r correspond à la longueur de la face avant 13 selon la direction de l'arête de cisaillage A1. Ce rayon de courbure r est le rayon de courbure minimal mais un rayon de courbure supérieur peut également être utilisé car il permettrait également la rotation et l'extraction de la lame 1. Le centre de courbure pour la face latérale 17 est l'arête 29 formée par l'intersection de la face latérale opposée 19 et de la face avant 13 tandis que le centre de courbure pour la face latérale 19 est l'arête 31 formée par l'intersection de la face latérale opposée 17 et de la face avant 13.

Ainsi, la lame peut être extraite de son logement vers l'avant par un pivotement autour de l'arête 29 ou 31 formant le centre de courbure comme représenté par les flèches 33 ou 35, l'inclinaison des faces latérales 17 et 19 permettant d'éviter le talonnement de la lame 1 contre le logement 5 lors du pivotement de la lame 1 pour l'extraire de son logement 5.

Un dispositif de fixation de la lame 1 dans le logement est également prévu. Selon un mode de réalisation, ce dispositif de fixation comprend des vis. Dans ce cas, la lame 1 comprend également une pluralité de trous, qui s'étendent de la face avant 13 à la face arrière 15 pour permettre la fixation de la lame 1 dans le logement 5. La face arrière du logement 5 comprend par exemple des filetages destinés à recevoir des vis de fixation, les trous 25 et 27 de la lame 1 étant placés en regard des filetages lorsque la lame 1 est positionnée dans le logement 5. Les trous 25 et 27 sont placés de manière symétrique sur la lame 1. Cependant, d'autres dispositifs de fixation mécaniques ou hydrauliques connus de l'homme du métier peuvent également être utilisés pour maintenir les lames dans le cadre de la présente invention, par exemple par un vérin hydraulique.

Du fait de la symétrie des surface latérales 17 et 19 et des trous 25 et 27, la lame 1 peut être placée dans un sens ou dans l'autre de sorte que lorsque l'arête de cisaillage A1 est usée, la lame 1 peut être retournée de 180° autour d'un axe normale à la face avant 13 pour utiliser l'arête A2 comme arête de cisaillage de la lame 1 de la presse (la face supérieure devenant alors la face inférieure et inversement, de même pour les faces latérales).

Selon un deuxième mode de réalisation, les surfaces latérales 17 et 19 peuvent être planes ou formées par une pluralité de surfaces planes inclinées les unes par rapport aux autres comme représenté sur la figure 3 qui représente une vue de dessus de la lame 1. Dans ce cas, pour tout point de la face latérale inclinée 17, 19, l'inclinaison, par rapport à la face avant 13, est inférieure ou égale à la tangente au cercle passant par ce point et dont le centre est la jonction entre la face avant 13 et la face latérale 19, 17 de la lame 1 opposée à ladite face latérale inclinée. Ainsi, pour la face latérale 17, l'inclinaison de la première surface plane notée s1, par rapport à la face avant 13, doit être inférieure à l'inclinaison de la tangente au cercle de rayon r1 centré sur la jonction 29 entre la surface latérale 19 et la surface avant 13. De même, l'inclinaison des surfaces planes respectives s2, s3 et s4 doit être supérieure à l'inclinaison de la tangente aux cercles de rayons respectifs r2, r3 et r4. Ces inclinaisons permettent d'éviter le talonnement de la lame 1 lors du pivotement de la lame autour de la jonction 29 pour extraire la lame 1 de son logement 5.

Pour les modes de réalisation présentés sur les figures 2 et 3, la lame 1 peut ne comprendre qu'une seule face latérale inclinée, l'autre face latérale étant perpendiculaire à la face avant 13. Cependant, dans ce cas, une seule arête pourra être utilisée comme arête de cisaillage.

Selon un troisième mode de réalisation représenté sur la figure 4, la lame de cisaillage 1 est réalisée en plusieurs blocs adjacents dans le sens d'une ou des arêtes de cisaillage A1, A2. Dans le cas présent, la lame 1 comprend deux blocs notés B1 et B2 symétriques, destinés à être disposés côte à côte au niveau d'une face latérale interne de contact perpendiculaire à la face avant 13. Les deux blocs B1 et B2 sont alignés selon l'arête de cisaillage A1. Le rayon de courbure noté r' de la face latérale externe correspond à la longueur selon l'arête de cisaillage A1 de la face avant 13 du bloc B1 ou B2. Dans le cas de la figure 4, les deux blocs B1 et B2 sont symétriques et peuvent pivoter vers l'avant par rapport à la jonction 37 entre la face latérale interne de contact et la face avant 13 et peuvent donc être considérés comme des blocs pivots. En effet, le bloc pivot correspond au bloc qui est retiré en premier par pivotement vers l'avant lors de l'extraction de la lame 1 de son logement 5. De plus, cette symétrie permet d'utiliser les arêtes A1 et A2 comme arêtes de cisaillage en retournant et en inversant les blocs B1 et B2 (la face supérieure devenant la face inférieure et inversement). Ainsi l'extraction de la lame 1 se fait par le pivotement vers l'avant du bloc B1 ou du bloc B2 autour de la jonction 37. Le deuxième bloc pouvant alors être extrait aisément puisqu'il n'y a plus d'efforts exercés par les parois du logement 5.

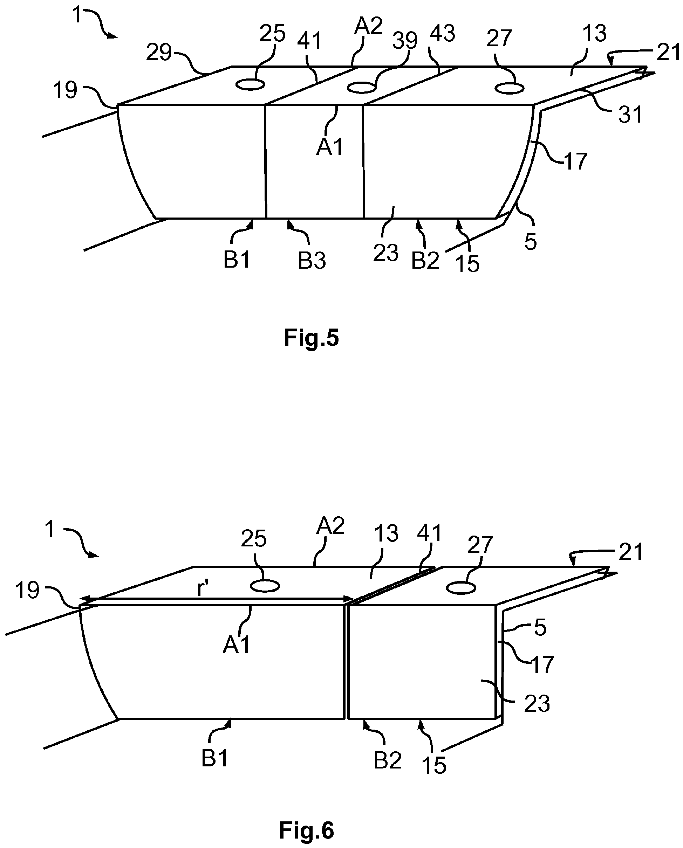

Selon un quatrième mode de réalisation, la lame 1 peut comprendre d'autres blocs intermédiaires placés entre les blocs B1 et B2 comme représenté sur la figure 5 dans le cas de trois blocs notés B1, B2 et B3. Le bloc B3 est de forme parallélépipédique et comprend également au moins un trou 39 pour permettre sa fixation par une vis au logement 5. L'extraction du bloc B1 comme bloc pivot se fait par rotation autour de la jonction 41 située à l'interface entre la face avant 13 et la face latérale de contact avec le bloc B3. L'extraction du bloc B2 comme bloc pivot se fait par rotation autour de la jonction 43 située à l'interface entre la face avant 13 et la face latérale de contact avec le bloc B3.

Par ailleurs, les blocs B1 et B2 peuvent également avoir des longueurs différentes dans le sens de l'arête de cisaillage A1 ou A2 que ce soit dans le mode de réalisation de la figure 4 ou de la figure 5. Cependant, dans ce cas, les rayons de courbure des faces latérales inclinées peuvent être différents et une seul arête de cisaillage peut être utilisée.

Dans les modes de réalisation des figures 4 et 5, les parois latérales externes 17 et 19 qui sont les parois inclinées peuvent comprendre une ou plusieurs surfaces planes (comme sur la figure 2). Ainsi l'extraction de la lame 1 se fait par le pivotement vers l'avant du bloc B1 autour de la jonction 41 ou du bloc B2 autour de la jonction 43, les autres blocs pouvant alors être extraits aisément.

Selon un cinquième mode de réalisation, un seul des blocs d'extrémité peut comprendre une paroi inclinée comme représenté sur la figure 6. Dans ce cas, une seule arête de cisaillage, A1 dans le cas présent, peut être utilisée. L'extraction de la lame 1 se faisant par le pivotement du bloc B1 autour de l'arête 41, le deuxième bloc B2 pouvant alors être extrait aisément.

Pour le quatrième et le cinquième mode de réalisation, le nombre de blocs peut bien évidemment être supérieur à trois.

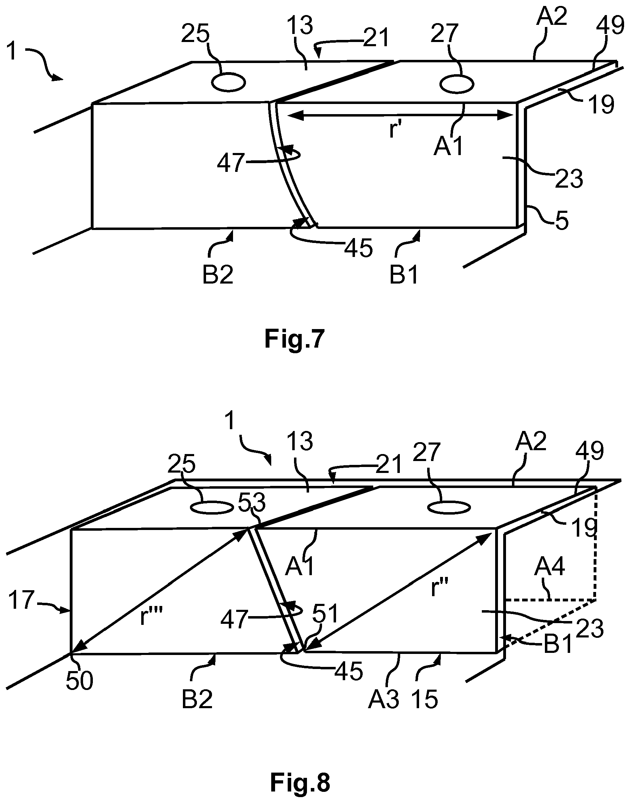

Selon un sixième mode de réalisation représenté sur la figure 7, la lame 1 a une forme parallélépipédique et comprend deux blocs notés B1 et B2 qui comprennent chacun une surface latérale interne incurvée notées respectivement 45 et 47, les faces incurvées 45 et 47 des deux blocs B1 et B2 étant complémentaires. L'angle de courbure r' correspond à la longueur selon l'arête de cisaillage A1 du bloc B1 et le centre de courbure est l'arête 49 située à la jonction entre la face avant 13 et la face latérale externe 19. Ainsi l'extraction de la lame 1 se fait par le pivotement vers l'avant du bloc B1 autour de la jonction 49, le bloc B2 pouvant alors être extrait aisément. De plus, les blocs B1 et B2 peuvent être retournés et inversés pour utiliser l'arête A2 comme arête de cisaillage.

Selon un septième mode de réalisation représenté sur la figure 8 et constituant un variante du sixième mode de réalisation dans lequel les faces internes inclinées 45 et 47 des blocs B1 et B2 sont planes. L'inclinaison de la face interne 45 du bloc B1 par rapport à la face avant 13 doit être inférieure à la tangente au cercle de rayon r" et dont le centre est la jonction 49 entre la face avant 13 et la face latérale externe 19 du bloc B1 au niveau de la jonction 51 entre la face arrière 15 et la face latérale interne 45 pour permettre le pivotement du bloc B1 vers l'avant. Le rayon r" correspond à la distance entre la jonction 49 et la jonction 51. L'arête A2 peut également être utilisée comme arête de cisaillage en retournant et en inversant les blocs B1 et B2. De plus, si le bloc B2 est symétrique par rapport au bloc B1 ou si l'inclinaison de la face interne 47 du bloc B2 par rapport à la face arrière 15 est inférieure à la tangente au cercle de rayon r"' dont le centre est la jonction entre la face arrière 15 et la face latérale externe 17 du bloc B2, au niveau de la jonction 53 entre la face avant 13 et la face latérale interne 47, alors Les blocs B1 et B2 peuvent être retournés pour utiliser également les arêtes A3 et A4 (l'arête A4 est représentée en transparence par des pointillés) comme arête de cisaillage. Le rayon r"' correspond à la distance entre la jonction 50 et la jonction 53. Dans ce cas, c'est le bloc B2 qui devient le bloc pivot de sorte que l'extraction de la lame 1 se fait par pivotement du bloc B2 vers l'avant. Par ailleurs, au lieu d'une surface plane, les surfaces inclinées 45 et 47 peuvent comprendre une pluralité de faces planes comme les faces 17 et 19 de la figure 2. Dans ce cas, l'inclinaison par rapport à la face avant 13 ou arrière 15 des portions planes doit être inférieure à l'inclinaison de la tangente au cercle ayant pour centre l'arête 49 pour B1 ou l'arête 50 pour B2 et passant par ladite portion plane pour éviter le talonnement lors du pivotement du bloc pivot vers l'avant. Dans ce cas, le septième mode de réalisation peut permettre d'utiliser les quatre arêtes longitudinales de la lame 1 comme arêtes de cisaillage.

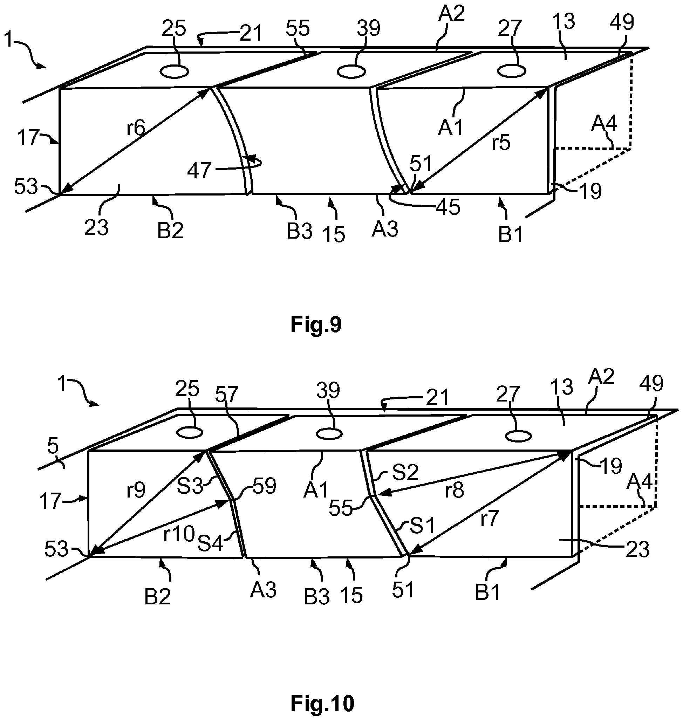

Selon un huitième mode de réalisation présenté sur la figure 9, la lame 1 a une forme parallélépipédique et comprend une pluralité de blocs, trois dans le cas présent, adjacents selon la direction des arêtes de cisaillage. Les blocs d'extrémité sont notés B1 et B2 et le bloc central est noté B3. Les faces latérales internes de contact entre les blocs sont incurvées. Le rayon de courbure de la face incurvée 45 pour le bloc B1 est égale au rayon r5 reliant la jonction 49 entre la face avant 13 et la face latérale externe 19 et la jonction 51 entre la face arrière 15 et la face latérale incurvée 45. Le rayon de courbure de la face incurvée 47 pour le bloc B2 est égale au rayon r6 reliant la jonction 49 entre la face arrière 15 et la face latérale externe 17 et la jonction 55 entre la face avant 13 et la face latérale incurvée 47. Les rayons de courbure peuvent également être supérieurs aux angles de courbure r5 et r6. Ainsi l'extraction de la lame 1 se fait par le pivotement vers l'avant du bloc B1 autour de la jonction 49, les blocs B3 et B2 pouvant alors être extrait aisément. De plus, les blocs B1, B2 et B3 peuvent être retournés et les blocs B1 et B2 inversés pour utiliser l'arête A2 comme arête de cisaillage. De plus les blocs B1, B2 et B3 peuvent également être retournés dans l'autre sens pour utiliser les arêtes A3 et A4 comme arêtes de cisaillage. Dans ce cas, c'est le bloc B2 qui devient le bloc pivot de sorte que l'extraction de la lame 1 se fait alors par le pivotement vers l'avant du bloc B2 autour de la jonction 53.

Selon un neuvième mode de réalisation représenté sur la figure 10, la lame 1 comprend également plusieurs blocs, trois dans le cas présent, adjacents selon la direction des arêtes de cisaillage. Les blocs d'extrémité sont notés B1 et B2 et le bloc central est noté B3. Les faces latérales internes de contact entre les blocs sont inclinées et forment une pluralité de surfaces planes, deux dans le cas présent. L'inclinaison de la première surface plane S1 du bloc B1 par rapport à la face avant 13 est inférieure ou égale à l'inclinaison de la tangente du cercle de rayon r7 et dont le centre est la jonction 49 entre la face avant 13 et la face latérale externe 19. Le rayon r7 est la distance entre la jonction 49 et la jonction 51 entre la face arrière 15 et la surfaces S1. De la même manière, l'inclinaison de la deuxième surface plane S2 du bloc B1 par rapport à la face avant 13 est inférieure ou égale à l'inclinaison de la tangente du cercle de rayon r8 et dont le centre est la jonction 49 entre la face avant 13 et la face latérale externe 19. Le rayon r8 est la distance entre la jonction 49 et la jonction 55 entre les surfaces S1 et S2.

Ainsi, l'extraction de la lame 1 se fait par le pivotement vers l'avant du bloc B1 autour de l'arête 49, les autres blocs B3 et B2 étant alors extraits facilement.

Pour utiliser les arêtes A3 et A4 comme arêtes de cisaillage, des conditions similaires doivent être appliquées au bloc B2. L'inclinaison de la première surface plane S3 du bloc B2 par rapport à la face arrière 15 est inférieure ou égale à l'inclinaison de la tangente du cercle de rayon r9 et dont le centre est la jonction 53 entre la face arrière 15 et la face latérale externe 17. Le rayon r9 est la distance entre la jonction 53 et la jonction 57 entre la face avant 13 et la surfaces S3. De la même manière, l'inclinaison de la deuxième surface plane S4 du bloc B2 par rapport à la face arrière 13 est inférieure ou égale à l'inclinaison de la tangente du cercle de rayon r10 et dont le centre est la jonction 53 entre la face avant 13 et la face latérale externe 19. Le rayon r10 est la distance entre la jonction 53 et la jonction 59 entre les surfaces S3 et S4.

Ainsi, lorsque les arêtes A3 ou A4 sont utilisées comme arêtes de cisaillage, l'extraction de la lame 1 se fait par le pivotement vers l'avant du bloc B2 autour de l'arête 53, les autres blocs B3 et B1 étant alors extraits aisément.

Pour les huitièmes et neuvièmes modes de réalisation, le nombre de blocs peut bien évidemment être supérieur à trois.

Il est également à noter que pour tous les modes de réalisation présentés précédemment la section des blocs de la lame 1 est constante entre la face supérieure 23 et la face inférieure 21 selon un axe normal à la face supérieure et inférieure.

La présente invention concerne également une presse comprenant un logement 5 destiné à recevoir une lame de cisaillage 1 telle que décrite précédemment. La presse comprend également une deuxième lame de cisaillage mobile 3 comme représenté sur la figure 1. La lame de cisaillage mobile 3 est fixée à un mors mobile grâce à un actionneur ou vérin 7 qui permet le déplacement de la lame mobile 3 vers la lame fixe 1 pour cisailler le matériau situés entre les deux lames 1 et 3. La presse comprend également des moyens de déplacement des matières à cisailler configurés pour déplacer lesdites matières de l'entrée de la presse vers les lames 1 et 3 de cisaillage et des moyens de déplacement des matières cisaillées vers la sortie de la presse. Ces moyens de déplacement comprennent par exemple un ou plusieurs actionneurs disposés selon différentes orientations pour pouvoir placer le matériau à cisailler entre les deux lames 1 et 3. Par ailleurs, la presse peut comprendre une première et une deuxième lames mobiles montées respectivement sur un premier et un deuxième mors mobile, les deux lames mobiles étant déplacées l'une vers l'autre lors du cisaillage.

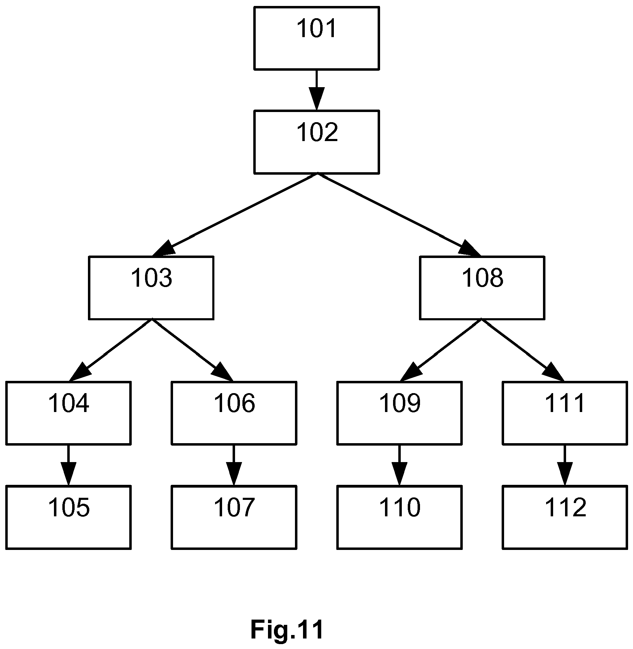

Les différentes étapes du procédé de changement de la lame de cisaillage 1 vont maintenant être décrites en détails à partir de l'organigramme de la figure 11.

La première étape 101 concerne le desserrage ou débridage d'un dispositif de fixation comme par exemple des vis de fixation de la lame 1 dans son logement 5. Le nombre de vis pouvant varier, notamment en fonction du nombre de blocs de la lame 1 de sorte que chaque bloc soit maintenu par au moins une vis (ou au moins un dispositif de fixation le cas échéant)

La deuxième étape 102 concerne le pivotement du bloc pivot vers l'avant autour de la jonction entre la face avant et la face latérale opposée à la face latérale inclinée.

Dans le cas où il y a plusieurs blocs, on passe à l'étape 103, sinon on passe à l'étape 108.

L'étape 103 consiste à enlever les autres blocs. Cette opération est aisée du fait de l'espace créé par l'extraction du bloc pivot et de l'absence désormais de contraintes latérales.

Si la lame 1 comprend une autre arête utilisable comme arête de cisaillage, on passe à l'étape 104 sinon on passe à l'étape 106.

A l'étape 104, on replace les blocs de manière à placer l'autre ou une autre arête utilisable de la lame 1 comme arête de cisaillage.

L'étape 105 consiste à resserrer ou brider le ou les dispositifs de fixation comme par exemple la ou les vis de fixation.

L'étape 106 consiste à placer une nouvelle lame 1 de cisaillage dans le logement 5 et l'étape 107 consiste à resserrer ou brider le ou les dispositifs de fixation comme par exemple la ou les vis de fixation.

A l'étape 108, si la lame 1 comprend une autre arête utilisable comme arête de cisaillage, on passe à l'étape 109 sinon on passe à l'étape 111.

A l'étape 109, on replace le bloc de manière à placer l'autre ou une autre arête utilisable de la lame 1 comme arête de cisaillage.

L'étape 110 consiste à resserrer ou brider le ou les dispositifs de fixation comme par exemple la ou les vis de fixation.

L'étape 111 consiste à placer une nouvelle lame 1 de cisaillage dans le logement 5 et l'étape 112 consiste à resserrer ou brider le ou les dispositifs de fixation comme par exemple la ou les vis de fixation.

Ainsi, l'utilisation d'au moins un bloc pivot dont la géométrie permet un pivotement vers l'avant autour d'une arête verticale permet de pouvoir extraire une lame 1 de presse de son logement 5 même lorsque les efforts appliqués sur la lame 1 durant son utilisation ont provoqués des micro-déformations de la lame 1 et des parois du logement 5 ce qui permet d'extraire plus facilement la lame 1 en vue de son retournement ou de son remplacement lorsque l'arête de cisaillage est usée. De plus, l'utilisation d'une lame 1 parallélépipédique comprenant plusieurs blocs permet d'utiliser les quatre arêtes longitudinales comme arêtes de cisaillage. Les caractéristiques décrites pour la lame fixe 1 s'applique également pour les lames mobiles comme la lame mobile 3.

## Revendications

1. Lame de cisaillage (1) destinée à être positionnée dans un logement (5) d'un bâti ou d'un mors mobile d'une presse, ledit logement (5) comprenant une première paroi d'appui, une deuxième paroi d'appui adjacente à la première paroi d'appui et deux parois latérales dans laquelle la lame (1) comprend une première face d'appui (21), une deuxième face d'appui (15) et deux faces latérales (17, 19) destinées à venir respectivement contre la première paroi d'appui, contre la deuxième paroi d'appui et contre les deux parois latérales du logement (5), la lame (1) comprenant également une première face de travail (13) opposée à la deuxième face d'appui (15) et sensiblement parallèle à la direction de cisaillage et une deuxième face de travail (23) opposée à la première face d'appui (21) sensiblement perpendiculaire à la direction de cisaillage et une arête de cisaillage (A1) à l'interface entre la première face de travail (13) et la deuxième face de travail (23),
**caractérisé en ce que** la lame (1) comprend un ou plusieurs blocs (B1, B2, B3) adjacents dans le sens de l'arête de cisaillage (A1),
au moins un bloc (B1), dit bloc pivot, comprenant une première face de travail (13) plus longue, dans le sens de l'arête de cisaillage (A1), que sa deuxième face d'appui (15) et une face latérale inclinée (17, 19, 45, 47) de sorte que pour tout point de la face latérale inclinée (17, 19, 45, 47), l'inclinaison, par rapport à la première face de travail (13), est inférieure ou égale à la tangente au cercle passant par ce point et dont le centre est la jonction entre la première face de travail (13) et la face latérale (17, 19) du bloc opposée à ladite face latérale inclinée (17, 19, 45, 47).

2. Lame de cisaillage (1) selon la revendication 1 comprenant un seul bloc et deux faces latérales inclinées (17, 19) symétriques de sorte que la lame de cisaillage (1) peut être placée dans un premier et/ou un deuxième sens dans le logement (5) de la presse.

3. Lame de cisaillage (1) selon la revendication 1 dans laquelle la lame (1) a une forme générale parallélépipédique et comprend plusieurs blocs complémentaires (B1, B2, B3) dont deux blocs d'extrémité (B1, B2) comprenant une face latérale inclinée (45, 47) par rapport à la direction de cisaillage, ladite face latérale inclinée (45, 47) par rapport à la direction de cisaillage étant située à l'interface entre deux blocs (B1, B2, B3).

4. Lame de cisaillage (1) selon la revendication 3 dans lequel la forme de la face latérale inclinée (45, 47) d'un bloc d'extrémité (B1, B2) est un arc de cercle dont le rayon (r, r', r5, r6) est la longueur de la première face de travail (13) selon la direction de l'arête de cisaillage et dont le centre correspond à la jonction (49, 53) entre la première face de travail (13) et la face latérale (17, 19) d'extrémité de la lame (1).

5. Lame de cisaillage (1) selon la revendication 3 ou 4 comprenant au moins trois blocs (B1, B2, B3) dans laquelle le premier bloc d'extrémité (B1) constitue le bloc pivot pour au moins une première orientation de la lame (1) dans le logement (5) tandis que le second bloc d'extrémité (B2) constitue le bloc pivot pour au moins une deuxième orientation de la lame (1) dans le logement (5).

6. Lame de cisaillage (1) selon l'une des revendications précédentes dans laquelle un bloc (B1, B2, B3) comprend au moins un perçage entre sa première face de travail (13) et sa deuxième face d'appui (15) pour permettre le passage d'une vis.

7. Presse comprenant au moins un logement (5) avec une première paroi d'appui, une deuxième paroi d'appui et deux parois latérales, ledit logement étant destiné à recevoir une lame de cisaillage (1) selon l'une des revendications 1 à 6.

8. Presse selon la revendication 7 comprenant deux logement (5) dont au moins un des logements est ménagé dans un mors mobile, ledit, au moins un, mors mobile étant actionné par un vérin.

9. Procédé de changement d'une lame de cisaillage selon l'une des revendications 1 à 6 montée dans un logement d'un presse-cisaille, ledit procédé comprenant les étapes suivantes :
- on desserre le dispositif de fixation de la lame de cisaillage dans son logement,
- on fait pivoter le bloc pivot vers l'avant autour de la jonction entre la face avant et la face latérale opposée à la face latérale inclinée,
dans le cas où il y a plusieurs blocs,
- on enlève les autres blocs,
si la lame comprend une autre arête utilisable comme arête de cisaillage,
- on replace les blocs de manière à placer l'autre arête utilisable de la lame comme arête de cisaillage,
- on resserre le dispositif de fixation,
sinon,
- on place une nouvelle lame de cisaillage,
- on resserre le dispositif de fixation.
